# EUROPEAN PATENT APPLICATION

(11) **EP 4 148 524 A1**
(43) Date of publication of application: **15.03.2023**
(21) Application number: 21196296.4
(22) Date of filing: 13.09.2021
(51) Int. Cl.: G05D 1/00, G05D 1/02

(54) **MINING VEHICLE TASK CONTROL**

(71) Applicant: Sandvik Mining and Construction Oy, 33330 Tampere (FI)
(72) Inventor: PUURA, Jussi, 33311 Tampere (FI)
(74) Representative: Sandvik

(57) **Abstract**

According to an example aspect of the present application, there is provided an apparatus and method to manage tasks in a mine environment (1), in particular tasks relating to mining vehicles (10) and unmanned aerial vehicles (50). To manage the tasks, a mining vehicle (10) is equipped with sensing means (4), such as for instance a scanner, in order to map the surrounding environment, such as for instance a tunnel (2). A mapping of the environment is concurrently carried out b an unmanned aerial vehicle, UAV (50), in communication with the mining vehicle (10), so as to send mapping information in wireless manner (30) to the mining vehicle. The information received by the mining vehicle are merged with the sense data of the vehicle in order to construct a complete map of the environment, which can be used for further tasks. In particular the UAV (50) is used to access regions of the environment which cannot be explored by the mining vehicle (10). A base station (4) can also be used to allow communication with a remote control system (6).

## Description

### FIELD

The present invention relates to mining operations and mining-related task management, and in particular to managing tasks of and by mining vehicles associated with an unmanned aerial vehicle.

### BACKGROUND

Mining or construction excavation worksites, such as hard rock or soft rock mines, may comprise areas for automated operation of mobile vehicles, herein referred to as vehicles. A vehicle may be an unmanned, e.g. remotely controlled from a control room, or a manned vehicle, i.e. operated by an operator in a cabin of the mobile vehicle. An automated vehicle operating in an automatic mode may operate independently without external control but may be taken under external control at certain operation areas or conditions, such as during states of emergencies.

Vehicles may comprise one or more sensors for scanning environment of the vehicle, to detect obstacles and/or tunnel wall surface, for example. Such sensors, such as two- or three-dimensional laser scanners, may be referred to as environment scanning sensors. Position tracking may be arranged particularly in underground mines on the basis of scanning data from the sensor(s) and a predefined environmental model.

Unmanned aerial vehicles (UAVs), such as drones, may be applied to support mining operations. A UAV may be applied to scan underground tunnel areas, for example.

### SUMMARY

The invention is defined by the features of the independent claims. Some specific embodiments are defined in the dependent claims.

According to a first aspect of the present invention, there is provided an apparatus, being configured to or comprising means configured for performing at least:
- detect a mining task assigned to a mining vehicle at a worksite, wherein the mining vehicle is associated with an unmanned aerial vehicle, UAV, the mining task being indicative of a portion of the worksite in relation to a worksite reference system,
- define an exploration task for the UAV on the basis of the mining task, wherein the exploration task comprises control instructions and target position data for the UAV, and
- transmit, to the UAV, at least one task control message associated with the exploration task.

According to a second aspect of the present invention, there is provided a method for performing a mining exploration task , the method comprising: detecting a mining task assigned to a mining vehicle at a worksite, wherein the mining vehicle is associated with an unmanned aerial vehicle, UAV, the mining task being indicative of a portion of the worksite in relation to a worksite reference system, defining an exploration task for the UAV on the basis of the mining task, wherein the exploration task comprises control instructions and target position data for the UAV, and transmitting at least one task control message associated with the exploration task to the UAV.

According to a third aspect, there is provided an apparatus comprising at least one processor, at least one memory including computer program code, the at least one memory and the computer program code being configured to, with the at least one processor core, provide the means for the apparatus and/or cause the apparatus at least to perform the method or an embodiment of the method.

According to a fourth aspect, there is provided a computer program, a computer program product or (a non-tangible) computer-readable medium comprising computer program code for, when executed in a data processing apparatus, to cause the apparatus to perform the method or an embodiment thereof.

### BRIEF DESCRIPTION OF THE DRAWINGS

FIGURE 1 illustrates an example of a vehicle at a worksite comprising an underground tunnel system;
FIGURES 2A-2E illustrate examples of a vehicle at a worksite comprising an underground tunnel system;
FIGURE 3 illustrates an example of a vehicle at a worksite comprising an underground tunnel system;
FIGURES 4 and 5 illustrate methods according to at least some embodiments; and
FIGURE 6 illustrates an example apparatus capable of supporting at least some embodiments.

### EMBODIMENTS

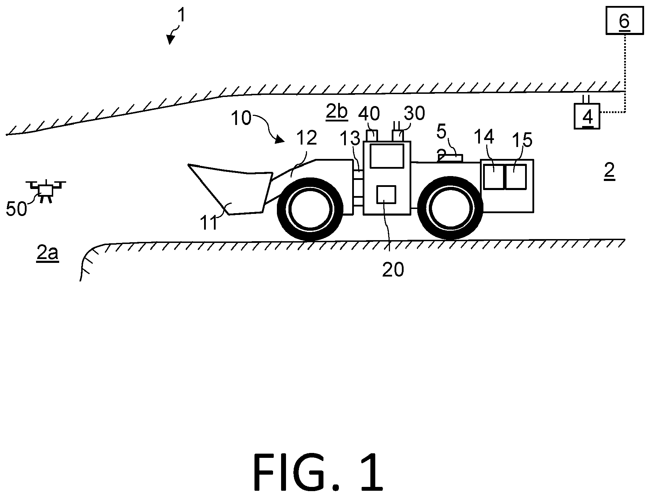

Figure 1 illustrates a simplified example of a portion of mining worksite 1, in the present example comprising an underground (tunnel) portion or tunnel 2. The mining worksite may comprise an ore mine or a construction site, such as a railway or road tunnel site. However, it will be appreciated that a worksite may comprise only on-surface areas, only underground areas, or both surface and underground areas. The term mining vehicle herein refers generally to mobile work machines suitable to be used in the operation of different kinds of underground or surface mining or construction excavation worksites, such as lorries, dozers, dumpers, vans, mobile rock drilling or milling rigs, mobile reinforcement machines, and bucket loaders or other kind of mobile work machines which may be used in different kinds of excavation worksites.

The vehicle is in the present example a loader or a load and haul (LHD) vehicle comprising a bucket 11 connected to a boom 12. The vehicle 10 may be, for example, an articulated vehicle comprising two sections connected by a joint 13. However, it will be appreciated that application of the presently disclosed features are not limited to any particular type of vehicle which may be used at excavation worksites. Some other examples of such vehicle include inspection vehicles, autonomous inspection vehicles (AIVs), lorries, dumpers, vans, mobile rock drilling or milling rigs, or mobile reinforcement machines.

In the example of Figure 1, the vehicle 10 comprises a system 14 of pumps for generating hydraulic pressure for operating various parts of the machine, such as lifting the boom 12, turning the bucket 11, etc. The vehicle 10 may comprise one or more other sources of energy, such as an accumulator, a hydrogen container, a fuel tank, etc. The vehicle 10 may comprise a motor 15, such as a combustion engine or an electric motor. Power from the motor 15 may be provided by a crank shaft to front and/or rear wheels either directly or via a gear box.

The vehicle 10 comprises at least one control unit 20 configured to control at least some functions and/or actuators of the vehicle. The control unit 20 may comprise one or more computing units/processors executing computer program code stored in memory. The control unit may be connected to one or more other control units of a control system of the vehicle, in some embodiments by a controller area network (CAN) bus. The control unit may comprise or be connected to a user interface with a display device as well as operator input interface for receiving operator commands and information to the control unit.

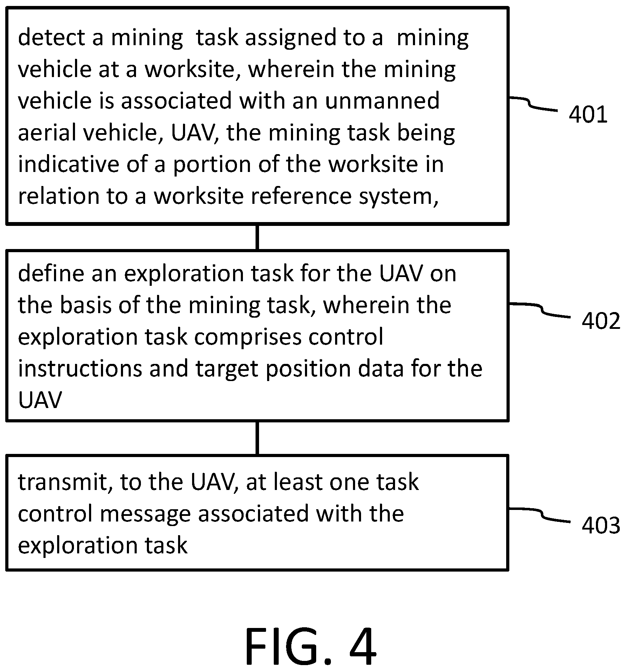

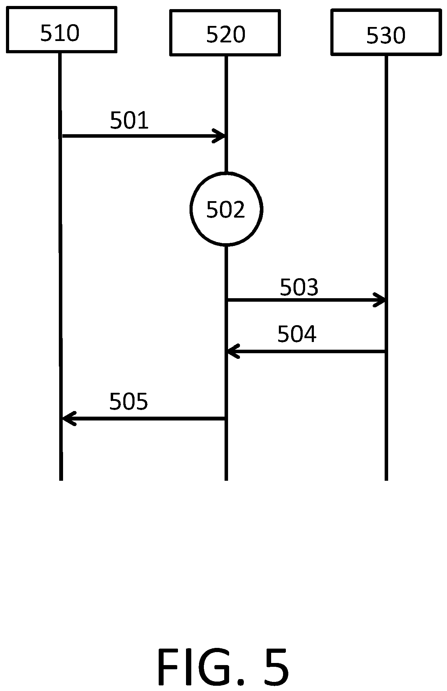

The control unit 20 may be configured to control autonomous operation control and utility control, such as UAV control. The mining vehicle 10, in some embodiments the control unit 20, may be configured to perform at least one of the methods of Figures 4 or 5, or an embodiment thereof. There may be one or more other control units in the vehicle for controlling other operations. It is to be appreciated that the control unit 20 may be configured to perform at least some of the below illustrated features, or a plurality of control units or controllers may be applied to perform these features. There may be further operations modules or functions performed by the control unit(s), e.g. an automatic positioning mode selection function, at least one positioning unit/module/function, and/or a navigation function. It is to be appreciated that at least some of the control functionality could be implemented even outside the vehicle, e.g. at a worksite management system.

The vehicle 10 may comprise a wireless communication device 30, by which the control unit 20 and/or another unit of control system of the vehicle 10 may be configured to establish a data transmission connection to at least one control device of a (mining operations) control system 6 external to the vehicle by utilising a wireless connection provided by a base station or access node 4. The communication device 30 may thus be operatively connected to a communications system of the worksite, such as a wireless access system comprising a wireless local area network (WLAN) and/or a cellular communications network (e.g. a 4G, 5G or another generation cellular network).

The system 6 may comprise or be connected to further network(s) and/or data processing system(s), such as a worksite management system, a cloud service, a data analytics system, an intermediate communications network, such as the internet, etc. The system may comprise or be connected to further device(s) or control unit(s), such as a handheld user unit, a vehicle unit, a worksite management device/system, a remote control and/or monitoring device, data analytics device, sensor system/device, etc.

The vehicle 10 may be unmanned. Thus, the user interface may be remote from the vehicle and the vehicle may be remotely controlled by an operator in the tunnel, or in control room at the worksite, or even long distance away from the worksite via communications network(s). The vehicle 10 may be an automated vehicle, which in an autonomous operating or driving mode may operate/drive independently without requiring continuous user control but which may be taken under external control during states of emergencies, for example. When the vehicle is in a manual driving mode, an operator drives the vehicle manually, by remote control or locally at the vehicle by operator controls. The operator may set the vehicle into a (default) automatic driving mode in which the vehicle drives automatically a specified route, e.g. between a loading point and a dump shaft. Below disclosed features may be applied when the vehicle 10 operates in the automatic driving mode, and/or for manually operated vehicles or when the vehicle is in the manual operating mode.

The vehicle 10 may comprise a positioning device or unit, such as a satellite (based) positioning unit for surface satellite-based positioning, which may also be referred to as Global Navigation Satellite System (GNSS) device.

The vehicle 10 comprises one or more scanning units, or scanners 40, configured to perform scanning of environment around the vehicle. For example, the vehicle 10 may comprise a front scanner configured to scan environment towards a normal forward driving direction (and naturally to sides within reach of the scanner). The vehicle may also comprise a rear scanner configured to scan the environment towards a direction backwards of the vehicle.

In some embodiments, the scanning results are applied to detect position and orientation of the vehicle and one or more further elements thereof, such as the position and orientation of the scanner 40, a landing pad 52, or the bucket 11. The control unit 20, or alternatively another control/computation unit in the vehicle, may be configured to compare operational scanned tunnel profile data to reference profile data stored in an environment model, which may also be referred to as worksite model or map. The control unit 20 may be configured to position the vehicle on the basis of finding a match in the environment model. Scanner-based positioning may be applied in underground worksites or other areas where satellite-based positioning is unavailable.

In an embodiment, the scanner 40 may be a 2D scanner configured to monitor tunnel walls at desired height, for example. In another embodiment, the scanner 40 is a 3D scanner, in which case 3D scanning data or point cloud data is produced and applied for positioning the vehicle. Point cloud data generated on the basis of scanning may be applied for generating and updating the worksite model. The vehicle 10 may comprise a simultaneous localization and mapping (SLAM) unit configured to both position the vehicle and (augment) map the environment on the basis of (2D or 3D) scanning information while the vehicle is driving.

A control unit, e.g. the control unit 20, may be configured to execute a point cloud matching functionality for matching operational (scanned) point cloud data (being scanned by the scanner(s) 40) to environment model point cloud data, such as. reference point cloud data. Position and orientation of the scanning device and/or another interest point of the vehicle, such as the (leading edge of the) bucket 11, may be determined in worksite coordinate system on the basis of the detected matches between the operational point cloud data and the reference cloud data. The scanner may be a laser scanner or a 3D or 4D radar, but it is to be appreciated that other scanner configurations and sensor types, appropriate for vehicles at underground worksite conditions may be applied instead of or in addition to laser sensors or radars.

A driving plan, or a route plan, may define a route to be driven by the vehicle 10 and may be used as an input for automatic driving control of the vehicle. The plan may be generated offline and off-site, for example in an office, or on-board the vehicle e.g. by a teaching drive. The plan may define a start point, an end point, and a set of route points for the automatic drive. Such plan may be sent via a wired or wireless connection to, or otherwise loaded to the vehicle, to a memory of the vehicle for access by the control unit 20 or another unit of the vehicle controlling navigation of the vehicle along the route. In another embodiment, route points are not pre-defined, but the mine vehicle defines path and steering control to avoid obstacles during autonomous driving towards a destination point.

In some embodiments positioning of the vehicle 10 is performed by dead-reckoning based positioning. The control unit 20 (or another control unit of the vehicle) may perform a dead reckoning algorithm configured to accumulate the vehicle's travelled distance and heading on the basis of input signal(s) indicative of vehicle wheel rotation and relative heading. Dead-reckoning (DR) refers generally to a method in which position of the vehicle 10 is estimated based on the orientation of the vehicle, for example, calculated from integration of the angular velocity measured by a gyro, and the moving distance, for example, integration of the vehicle speed calculated from the number of pulses of a tire pulse sensor and the tire diameter. It is to be appreciated that the system may comprise further operational modules supplementing dead reckoning based position tracking, such as a tyre slipping and/or wear compensation module. Since error is accumulated by DR, the DR based position or positioning may be corrected by another positioning source. While in the surface section 2, satellite visibility enables to correct positioning of the vehicle 10 based on position obtained by a GNSS device. Further, e.g. while in the underground section 3, environment based scanning may be used to correct the DR based positioning, such as the positioning based on the scanner 40 and the mapping of scanned tunnel profile data from 2D or 3D scanner and the environment model.

A UAV 50 may be associated with the mining vehicle 10. The association of the UAV with the mining vehicle may refer to the UAV being at least known by the mining vehicle. The mining vehicle may provide a platform for the UAV and instruct the UAV. Association of an apparatus (e.g. the UAV 50) with a counterpart apparatus (e.g. the mining vehicle 10) may comprise at least one of the following relationships: the apparatus is on the same network as the counterpart, the apparatus and the counterpart are in physical proximity, at least one of the apparatus and counterpart are assigned to the other, the apparatus is on the same worksite as the counterpart. The UAV may be specific to a particular mining vehicle, or part of its configuration, or the UAV may connect and support multiple mining vehicles.

The UAV 50 may comprise a sensor assembly, which may provide a monitoring capability so as to allow the UAV to capture data from the environment surrounding the UAV (and the vehicle 10) and send the captured data back to the vehicle. This may enable the UAV to provide the vehicle with information about surrounding environment of the UAV in substantially real-time during flying of the UAV. The UAV 50 may be provided with an image sensing capability so as to send real-time image data to the vehicle. The UAV may comprise a scanner, such as a 3D scanner, e.g. a light detection and ranging, LIDAR scanner, to perform environment scanning and generate environment sensing data, to explore a worksite portion. The sensing data may comprise or be further processed to generate mapping data. Point cloud data generated on the basis of scanning may be applied for generating and updating mapping data, such as the worksite map. The UAV may comprise a SLAM unit configured to both position the UAV and map the environment on the basis of (2D or 3D) scanning information while flying.

The mining vehicle 10 may comprise a landing platform or pad 52, which may also be referred to as a docking station, for the UAV 50. The landing pad 52 may comprise docking element(s) enabling landing of the UAV and securing the UAV when onboard and travelling with the mining vehicle. The landing pad may also comprise a charger unit to supply a charge supply connector of the UAV 50.

The landing pad 52 may comprise an antenna and/or transceiver (not shown) for enabling transmission and reception of wireless signals. Alternatively, the antenna may be provided in another position of the vehicle 10.

The landing pad 52 may be operatively connected to the mining vehicle 10 via wired or wireless connection, such as wired Ethernet or WLAN. The landing pad may communicate to the UAV with its own built-for-purpose radio system. The landing pad may be configured to relay the data of the UAV to the vehicle and mine. In another embodiment, the mining vehicle is configured to concurrently communicate directly with the landing pad 52 and the UAV 50 with separate connections. In another embodiment, the mining vehicle is configured to communicate directly with the UAV, and may further be configured to communicate also the state of the landing pad.

A high bandwidth connectivity by a wireless communication device of the mining vehicle 10 to the worksite system may be utilized to provide wireless connectivity for the landing pad 52 and/or the UAV 50. For example, 3GPP 5G new radio (NR) sidelink or WLAN based communication may be applied. The mining vehicle can expose one or more communication interfaces of the vehicle for the UAV and/or landing pad to send and receive information to the UAV. For example, such information may include one or more of location of the vehicle or the landing pad, vehicle state, positioning assistance, commands, map data.

Exploration of a worksite volume, such as an underground tunnel portion, may include a portion 2a, e.g. a shaft or narrow/low portion, unreachable to scan by the mining vehicle 10. Thus, the UAV 50 may be instructed to perform a mining exploration task, to scan such portion. However, when a satellite based positioning system is not available, e.g. at underground tunnels, the UAV may position themselves in relation to its starting point, or source position, in the present example the landing pad 52. It should be possible, for example, for a server or e.g. for an operator at a remote control room to know the status of the UAV and the mining vehicle, in order to monitor or control their operations.

The worksite model may generally refer to a worksite map or an environment model, indicative of positional data in coordinate values of or in relation to the worksite reference system, in some embodiments in global coordinates. The worksite reference system may refer to a reference system applied at least locally at the worksite for the worksite model, in some embodiments the global coordinate system. The worksite reference system may be the same coordinate system in which the worksite plan (such as mine plan) is given. The reference system may also comprise metadata, such as timestamps, relating to the positional data. Mapping data may refer generally to data representative of or modelling worksite portion profile, such as an underground tunnel profile represented by point cloud data.

There are now provided further improvements for improving mapping of worksite, for example by utilizing an UAV associated with a mining vehicle, as further illustrated below.

In the embodiments of this disclosure, tasks are used to formulate and communicate orders to the various apparatuses. A task may comprise one task, or a plurality of sub-tasks, which may be ranked by at least one of the following: date of task, importance, desired execution order, timestamp of previously recorded data, geographical position (i.e. location). An apparatus such as a mining vehicle may be configured so that it may, responsive to a determination, generate subtasks based on a task. A task may be communicated as a machine-readable data message comprising intended recipient (mining vehicle and/or UAV), task type. Data may be provided in fields or headers within said data message. A task may comprise at least one of the following: location data such as global, worksite, or local coordinates, and alternatively or additionally destination point, waypoints, trajectories, routes. A task may be indicative of an area (or volume) of the worksite (in relation to a worksite reference system). Tasks may be, for example, mining tasks, exploration tasks.

An apparatus may be configured to detect a task. Such detection may comprise querying a database for tasks comprising an apparatus identifier which matches the querying apparatus or an identifier of an apparatus associated with the querying apparatus, and determining that the task should be performed by the querying apparatus or an apparatus associated with the querying apparatus. Alternatively or additionally, the detection may comprise receiving a data transmission comprising at least one task, and parsing the data transmission for tasks comprising an apparatus identifier which matches the parsing apparatus or an identifier of an apparatus associated with the parsing apparatus. Further, the apparatus may, based on an assignment-related determination, assign tasks to itself or an associated apparatus even if the task does not comprise a task identifier which matches the apparatus or an associated apparatus. In such cases the apparatus may optionally transmit a task acceptance message to other devices on the network.

The assignment-related determination may comprise comparing any of the following data related to the apparatus or an associated apparatus to a predetermined index: present and/or future availability, technical capabilities of the apparatus, position of apparatus, location of volume, reachability of volume, battery level of apparatus, fuel level of apparatus. Availability may be calculated based on the current/future tasks assigned to the apparatus or an associated apparatus.

In some embodiments, an apparatus may be configured to provide a task. Providing a task may comprise transmitting a task via a network, such as a wireless or wired network, or storing the task within a database or data structure. In some embodiments, a task may be provided via a task control message, which may comprise any of the above-mentioned data, such as target location data, control instructions, and additionally or alternatively: task execution time, task importance.

In some embodiments, an apparatus may be configured to define the task for itself, a counterpart apparatus, or any other known apparatus. Defining a task may comprise:
- parsing a task, wherein the parsing comprises determining the target locations and desired outcomes of the task,
- determining, on the basis of capability information, which apparatuses can reach the said target locations to perform said tasks,
- generating, based on the parsing and determining, at least one task for at least one apparatus, the generated task comprising a target location and an action to perform.

Alternatively or additionally, defining a task may be automatically done by an apparatus based on any of the following criteria or a combination thereof: time and/or date, elapsed time since the task was last performed, related task information, data age, apparatus locations, apparatus capability. Capability information may comprise data indicating the technical capabilities of the apparatus, e.g. how the apparatus moves (on the ground or in the air), or what type of scanning equipment the apparatus carries (e.g. camera, scanner, or both).

In some embodiments, at least one mining task may be used to indicate that an apparatus, such as the vehicle 10, should perform a mining-related task. A mining task may comprise at least one of the following mining task types: hauling to a specified location, drilling, excavating, scaling, emptying load, loading, transferring loads, transmitting data, receiving data, connecting to base station, connecting to UAV, connecting to mining vehicle. In an example embodiment, a mining task comprises at least one exploration task.

In some embodiments, at least one exploration task may be used to indicate that an apparatus, such as the mining vehicle 10 and/or UAV 50, must explore an exploration target. The exploration target may comprise at least one of a: volume, location, locale, position, shaft, tunnel, stope, corridor, level, a three-dimensional space in a worksite map, name of stope, name of tunnel. An exploration task may comprise at least one of the following exploration task types: moving to a specified location, imaging a target location, performing environment mapping or scanning, generating point cloud data, streaming live video, transmitting data, receiving data, etc.

Mining tasks and exploration tasks may comprise a target location or position, as target position data, comprising at least one of a: volume, location, locale, position, shaft, tunnel, stope, corridor, level, a three-dimensional space in a worksite map, name of stope, name of tunnel, task site. Said target location and task type may be given, for example, predetermined by the task performing apparatus, task-defining or assigning apparatus, or another apparatus, or it may be generated or determined ad hoc, based on at least one of the following: based on apparatus, such as mining vehicle, location or proximity relative to the target location, responsive to gathered data attributes such as age of data, time of day. Said target location may be divisible into sub-volumes or sub-areas. Target location data may be provided with the task, comprising any of the following: target area or volume to be mapped, one or more points to be mapped, or a path to be mapped.

A mining task assigned to a mining vehicle, such as the vehicle 10, may be indicative of a portion of the worksite in relation to a worksite reference system, such as a portion of the worksite map in global coordinates. An exploration task may be defined, by at least one of the mining vehicle and the system 6, for the UAV on the basis of the mining task. The exploration task comprises control instructions and target position data for the UAV. For example, the control instruction may comprise the type of the exploration task. The target position data for the UAV may be defined based on positional information provided in the mining task, e.g. as single target point, an area, or volume within the portion of the worksite indicated in the mining task. However, it is to be appreciated that also other information, for example the information in the mining task, may be used to define the exploration task, such as the task type.

For example, the target position data to the UAV may comprise at least one target position, which may also be referred to as a target mapping position. The target position may be defined in local reference system or coordinates of the UAV. Alternatively, the target position may be defined in relation to the worksite coordinates, in which case the UAV stores the worksite map or a portion thereof. The worksite map or a portion thereof may be transmitted to the UAV by the mining vehicle or the control system.

The apparatus may be configured to perform coordinate transformation on a set of first coordinates of the worksite map, said first coordinates being associated with the first mining task, to generate a set of second coordinates in the reference system of the UAV, wherein the second coordinates are associated with the exploration task. For example, the first coordinates may define a position of underground tunnel to be explored in mine coordinates, and the second coordinates may define the target position for the UAV 50 to fly and explore in relation to the mining vehicle 10. Thus the target position for the UAV in the task control message may be relative to the mining vehicle, for example, in relation to the source/starting position of the UAV at the landing pad 52 (at the beginning of the aerial exploration task), and indicate the required movement of the UAV in relation to the vehicle. The source position of the UAV may be defined based on position of the mining vehicle defined based on the SLAM unit of the mining vehicle, for example. Mining exploration tasks may be defined relative to the source position of the UAV, with the beneficial effect that worksite coordinates need not be transmitted to the UAV, which may reduce memory usage. When coordinates are transmitted to the UAV, the mapped data may be directly provided into worksite coordinates by the UAV.

The apparatus may also perform coordinate transformation on a set of coordinates received by the apparatus from the UAV, to generate a set of third coordinates in the reference system of the worksite map. Mapping data from the UAV, e.g. point cloud data with transformed (third) coordinates in the worksite reference system, may be added into the mine map based on or as a result of the exploration task.

The apparatus, in some embodiments the mining vehicle 10, may select a first sub-area or sub-volume of volume indicated in the mining task to be mapped by the UAV, for example as part of defining an exploration task. The exploration task to the UAV may be defined on the basis of the selected sub-volume. A second sub-area or sub-volume of the volume indicated in the mining task may be assigned to be mapped by the mining vehicle. The target position data for the UAV may be defined on the basis of the selected first sub-area/volume.

The task and sub-area/volume definition may apply current position of the mining vehicle and/or current position of the UAV as an input (parameter). Mining vehicle dimensions data may also be applied as an input parameter when defining tasks, selecting volumes, to determine on the basis of the available map or scanning data, if the mining vehicle is able to move so as to map a portion of the worksite indicated in the mining task. For example, the mining vehicle may be physically too large to enter certain areas or volumes, which may be taken into account. Also properties of the scanner 40 and/or the scanner of the UAV 50, such as available or maximum scanning range may be applied.

Based on the mining task, the portion of the worksite to be mapped may be defined as 3D space in the worksite map on the basis of current position of the mining vehicle and/or current position of the UAV in the worksite map. At least one target mapping position in the 3D space may be defined. Such target mapping position may be defined as the target position data for the UAV in the task control message. As indicated above, there may be further processing regarding the target mapping position, in some embodiments coordinate transformation to the local reference system of the UAV.

For example, in accordance with the above, a task may be automatically defined by an apparatus, such as a worksite management system and/or server, every Monday to map a desired volume of the worksite. The task need not be assigned to a specific mining vehicle, rather, the mining vehicle nearest to the volume may assign the task to itself. The mining vehicle may define a task for an associated UAV to map at least a portion of the volume, for example if the portion is unreachable for the mining vehicle. In another example, a mining vehicle may be associated with a first UAV and a second UAV, and it may then decide to define a task for a UAV based on at least one criterion such as for the UAV having more battery charge.

In another example, the mining vehicle is a drilling rig, which is provided with a mining task to drill set(s) of holes according to a pre-defined drilling plan (which may also be included in the mining task). The mining task may also indicate or instruct the drilling rig to explore the related environment, to augment the drill map. The mining vehicle may assign the UAV to perform the exploration or explore selected sub-volume or area.

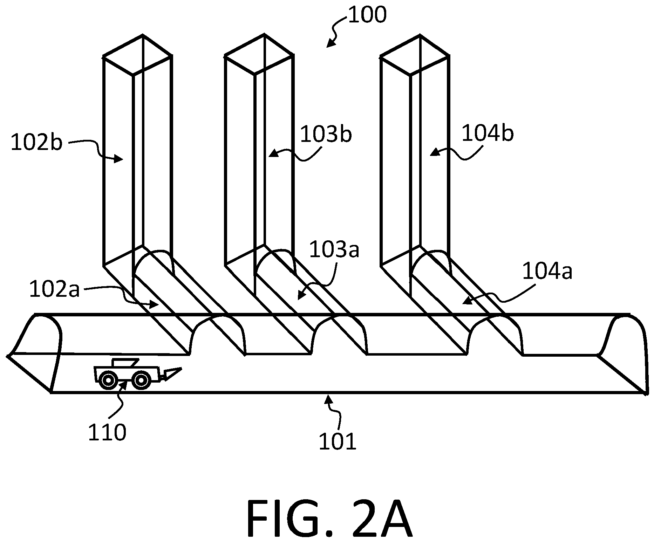

Figure 2A illustrates an example mine site 100. Mine site 100 comprises tunnels 101, 102, 103 and 104. The tunnels 102, 103 and 104 comprise horizontal portions 102a, 103a and 104a and vertical portions 102b, 103b and 104b, respectively. Mining vehicle 110 may traverse the tunnels. Mining vehicle 110 is configured to carry a UAV 150 (not shown in Fig. 2A).

There may be a prior knowledge of what the area (mine site 100) has looked like (existing mapping results) or was planned to look like (mine design or drawings). This information is represented by the depiction in Fig. 2A. Such information may be used as a basis for task definition.

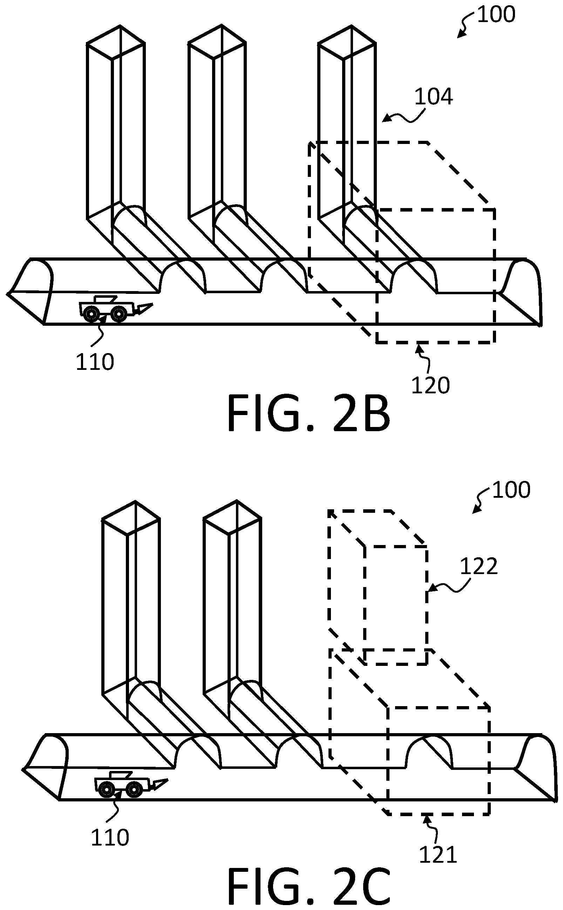

As seen in Figure 2B, in an example embodiment, a task designating an area 120 to be mapped is assigned to mining vehicle 110. Area 120 may be given as an area or volume in the mine reference coordinate system. The task may be broken down to volume(s) to be explored by the mining vehicle and volume(s) to be explored by the UAV, whereby the breaking down (parsing, determining and generating) may be done by mining vehicle 110 or a control device of a mining operations control system 6. As part of the breaking down, prior knowledge can be used to pre-analyze:
- which parts of the volume are reachable by wheels from the current location of the mining vehicle
- which parts of the volume are not reachable by wheels from the current location of the mining vehicle
- If the vehicle is not already in the explored volume, what is the best path to get there.

Final decision of portions to be explored by the UAV may finally be done by the mining vehicle, and additionally or alternatively by the system 6, when the mining vehicle mapping the area confirms that there is a non-drivable entrance to the volume of interest shown by the mapping result by the mining vehicle.

As seen in Figure 2C, the target volume 120 has been split into sub-volumes 121 and 122, assigned to the mining vehicle 110 and UAV 150 respectively. For the sake of clarity, the pre-existing information relating to the target volume 120 has been omitted from Figure 2C, although it optionally may be used by mining vehicle 110 and UAV 150.

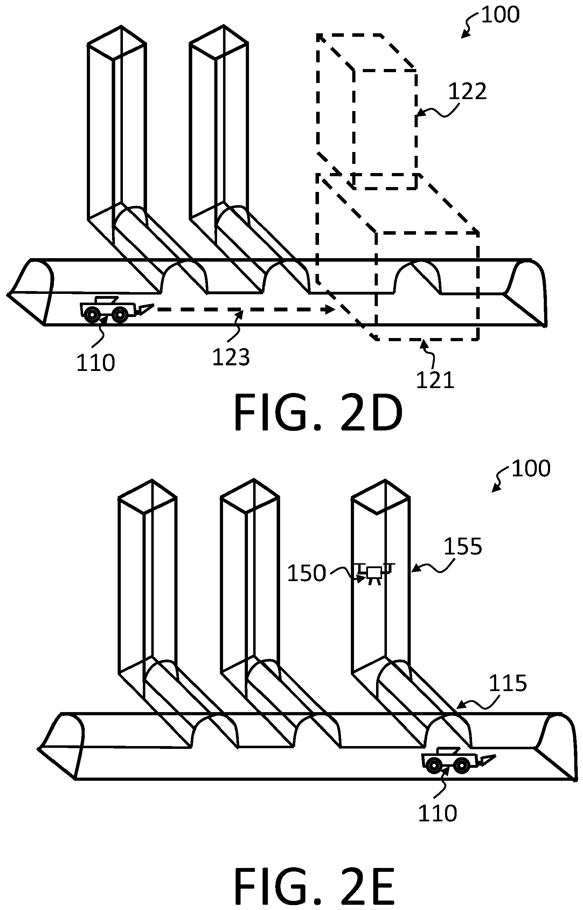

As seen in Figure 2D, a path 123 has been generated from the mining vehicle 110 location to the target volume 120. Path 123 may be generated onboard mining vehicle 110 or it may be generated elsewhere, such as by the control device of a mining operations control system 6. The mining vehicle 110 may be configured to perform onboard operations such as verification and optimization with respect to path 123. Once the mining vehicle 110 has proceeded to the vicinity of the target volume, it may define position(s) at which it may further drive (from its current position), e.g. based on continuously received scanning results from the scanner 40. When arriving at such (target or end) position, the mining vehicle may define the exploration task for the UAV and instruct the UAV to perform the exploration task.

As seen in Figure 2E, the mining vehicle 110 has caused the mapping to take place, whereby the mining vehicle 110 and the UAV 150 have generated mapping results 115 and 155, respectively. The exploration of a volume may be deemed complete when the mapping results of both the UAV 150 and the mining vehicle 110 together form a closed surface (closed volume) from within there is no access to the rest of the volume of interest. In other words, the mapping is complete when the mapped surfaces do not comprise any holes or unmapped areas, with the possible exception of known entrances to the volume of interest.

A benefit of the combined mapping approach is that the UAV has a limited flight time and can only be used for short flight missions effectively. The vehicle may be used as much as possible to traverse large areas on wheels and the UAV's flight time is reserved for situations where it is needed. This approach provides faster mapping results (as multiple apparatuses may map simultaneously) and prolongs the lifetime of equipment, especially UAV equipment as repeated charging will have a negative effect on the battery of the UAV.

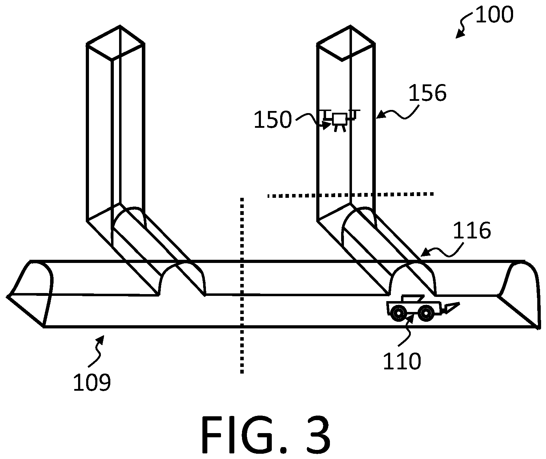

As seen in Figure 3, which illustrates a similar situation to Figure 2E, both the mining vehicle 110 and the UAV 150 have achieved mapping results 116 and 156, respectively. Existing mapping results 109 are already present within the mine information system, for example, a control device of a mining operations control system 6 or the mining vehicle 110. The mapping results are shown separated by the dotted lines in Figure 3. In an example embodiment, when combining mapping results from multiple sources, the mapping result 116 from the vehicle 110 may be used to link or tie the mapping result 156 by the UAV 150 to existing survey results 109 in mine reference coordinates. In case of overlapping results, earlier defined results may be replaced by newly defined results, or the earlier point data is maintained.

As illustrated in Figure 4, a method is provided for managing tasks, such as mining tasks. The method may be performed by a vehicle and a controlling apparatus thereof, such as the vehicle 10, and by the control unit 20 thereof. The method may comprise:
- Detecting (401) a mining task assigned to a mining vehicle at a worksite, wherein the mining vehicle is associated with an unmanned aerial vehicle, UAV, the mining task being indicative of a portion of the worksite in relation to a worksite reference system,
- Defining (402) an exploration task for the UAV on the basis of the mining task, wherein the exploration task comprises control instructions and target position data for the UAV, and
- Transmitting (403) at least one task control message associated with the exploration task to the UAV.

As illustrated in Figure 5, a method is provided for managing tasks, such as mining tasks. The method may be performed by UAV 530 and an apparatus comprising subsystems 510 and 520, or by UAV 530 and apparatus 510 and apparatus 520. Apparatus 510, 520 may comprise or be comprised by any suitable apparatus, for example any of the following: a vehicle, such as a mining vehicle for example the vehicle 10, the vehicle 110, the control unit 20, the system 6, such as a worksite management system, apparatus 60. The method may comprise:
- Detecting (501) a mining task assigned to a mining vehicle at a worksite wherein the mining vehicle is associated with an unmanned aerial vehicle, UAV 530, the mining task being indicative of a portion of the worksite in relation to a worksite reference system,
- Defining (502) an exploration task for the UAV 530 on the basis of the mining task, wherein the exploration task comprises control instructions and target position data for the UAV, where the defining comprises: selecting a first sub-area or sub-volume of volume indicated in the mining task to be mapped by the UAV, assigning a second sub-area or sub-volume of the volume indicated in the mining task to be mapped by the mining vehicle,
- Transmitting (503), to the UAV, at least one task control message associated with the exploration task,
- and, optionally, receiving (504) from UAV 530 data related to the exploration task,
- and, optionally, transmitting (505) said received data to another apparatus or subsystem.

An electronic device comprising electronic circuitries may be an apparatus for realizing at least some embodiments illustrated above, such as the methods illustrated in connection with Figure 4 and Figure 5 and features illustrated for the control unit 20. The apparatus may be comprised in at least one computing device connected to or integrated into a control system of the vehicle. Such control system may be an intelligent on-board control system controlling operation of various sub-systems of the vehicle, such as a hydraulic system, a motor, etc. Such control systems are often distributed and include many independent modules connected by a bus system of controller area network (CAN) nodes, for example.

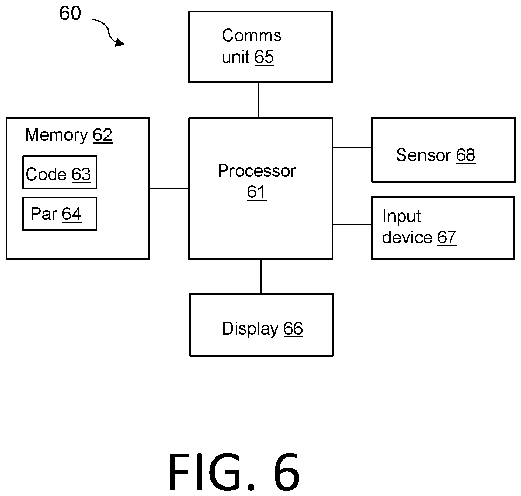

Figure 6 illustrates a simplified example apparatus capable of supporting at least some embodiments of the present invention. Illustrated is a device 60, which may be configured to carry out at least some of the above-illustrated embodiments relating to positioning control. In some embodiments, the device 60 comprises or implements the control unit 20, a mining vehicle 10, a mining vehicle 110, the system 6, a worksite management system, a server, or other module(s), functions and/or unit(s) for performing at least some of the above-illustrated embodiments.

Comprised in the device 60 is a processor 61, which may comprise, for example, a single- or multi-core processor. The processor 61 may comprise more than one processor. The processor may comprise at least one application-specific integrated circuit, ASIC. The processor may comprise at least one field-programmable gate array, FPGA. The processor may be configured, at least in part by computer instructions, to perform actions.

The device 60 may comprise memory 62. The memory may comprise random-access memory and/or permanent memory. The memory may be at least in part accessible to the processor 61. The memory may be at least in part comprised in the processor 61. The memory may be at least in part external to the device 60 but accessible to the device. The memory 62 may be means for storing information, such as parameters 64 affecting operations of the device. The parameter information in particular may comprise parameter information affecting the positioning control related features, such as threshold values.

The memory 62 may be a non-transitory computer readable medium comprising computer program code 63 including computer instructions that the processor 61 is configured to execute. When computer instructions configured to cause the processor to perform certain actions are stored in the memory, and the device in overall is configured to run under the direction of the processor using computer instructions from the memory, the processor and/or its at least one processing core may be considered to be configured to perform said certain actions. The processor may, together with the memory and computer program code, form means for performing at least some of the above-illustrated features in the device, such as the methods of Figures 4 and 5.

The device 60 may comprise a communications unit 65 comprising a transmitter and/or a receiver. The transmitter and the receiver may be configured to transmit and receive, respectively, i.a. data and control commands within or outside the vehicle. The transmitter and/or receiver may be configured to operate in accordance with global system for mobile communication, GSM, wideband code division multiple access, WCDMA, long term evolution, LTE, 3GPP new radio access technology (N-RAT), wireless local area network, WLAN, a non-terrestrial communication standard, and/or Ethernet standards, for example. The device 60 may comprise a near-field communication, NFC, transceiver. The NFC transceiver may support at least one NFC technology, such as NFC, Bluetooth, or similar technologies.

The device 60 may comprise or be connected to a UI. The UI may comprise at least one of a display 66, a speaker, an input device 67 such as a keyboard, a joystick, a touchscreen, and/or a microphone. The UI may be configured to display views on the basis of above illustrated embodiments. A user may operate the device and control at least some of above illustrated features. In some embodiments, the user may control the vehicle 10 via the UI, for example to manually drive the vehicle, operate a boom, change driving mode, change display views, modify parameters 64, etc.

The device 60 may further comprise and/or be connected to further units, devices and systems, such as one or more sensor devices 68, such as the scanner(s) 40 or other sensor devices sensing environment of the device 60 or properties of the vehicle, such wheel rotation or orientation changes.

The processor 61, the memory 62, the communications unit 65 and the UI may be interconnected by electrical leads internal to the device 60 in a multitude of different ways. For example, each of the aforementioned devices may be separately connected to a master bus internal to the device, to allow for the devices to exchange information. However, as the skilled person will appreciate, this is only one example and depending on the embodiment various ways of interconnecting at least two of the aforementioned devices may be selected without departing from the scope of the present invention.

An apparatus, such as the device 60, comprising at least one processor and at least one memory including computer program code, may be configured to: detect a mining task assigned to a mining vehicle at a worksite, wherein the mining vehicle is associated with an unmanned aerial vehicle, UAV, the mining task being indicative of a portion of the worksite in relation to a worksite reference system, define an exploration task for the UAV on the basis of the mining task, wherein the exploration task comprises control instructions and target position data for the UAV, and transmit, to the UAV, at least one task control message associated with the exploration task.

The apparatus may be configured to: select a first sub-area or sub-volume of volume indicated in the mining task to be mapped by the UAV, define the exploration task to the UAV on the basis of the selected first sub-area or sub-volume, and assign a second sub-area or sub-volume of the volume indicated in the mining task to be mapped by the mining vehicle. Further, the apparatus may be configured to define the target position data for the UAV on the basis of the selected first sub-area or sub-volume.

The apparatus may be configured to: define, based on the mining task, the portion of the worksite to be mapped as three-dimensional space in a worksite map on the basis of current position of the mining vehicle and/or current position of the UAV in the worksite map, define at least one target mapping position in the three-dimensional space, and define, as said target position data, at least one target position for the UAV on the basis of the defined target mapping position in the worksite map.

The apparatus may be configured so that at least one target position for the UAV is defined in the at least one task control message in relation to a source position of the UAV or in relation to the worksite reference system.

The apparatus may be configured to: perform coordinate transformation on a set of first coordinates of a worksite map, said first coordinates being associated with the first mining task, to generate a set of second coordinates in a reference system of the UAV, wherein the second coordinates are associated with the exploration task.

The apparatus may be configured so that the target position data comprises at least one of: a target area or volume to be mapped by the UAV, one or more points to be mapped by the UAV, or a path to be mapped by the UAV.

The apparatus may be configured to: receive the mining task from a mining operations control apparatus, such as: a worksite management system, a worksite server or a cloud server, and to transmit the task control message by at least one of: a wireless transmitter of the mining vehicle, a UAV launch pad of the mining vehicle.

The apparatus may be configured to: define a target area of a worksite on the basis of a position of the mining vehicle in relation to the worksite reference system, define the mining task based on the target area of a worksite in a worksite reference system, wherein the defining includes said indication of the area of the worksite in relation to the worksite reference system, and assign the mining task to the mining vehicle.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

References throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

As used herein, a plurality of items, elements, and/or materials may be presented in a common list for convenience. However, these lists should be construed as though each member of the list is individually identified as a separate and unique member. Furthermore, the described features, items, elements, or characteristics may be combined in any suitable manner in one or more embodiments.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

## Claims

1. An apparatus for mine vehicle task control, the apparatus comprising at least one processor and at least one memory including computer program code, the at least one memory and the computer program code configured to, with the at least one processor, cause the apparatus at least to:
- detect a mining task assigned to a mining vehicle at a worksite, wherein the mining vehicle is associated with an unmanned aerial vehicle, UAV, the mining task being indicative of a portion of the worksite in relation to a worksite reference system,
- define an exploration task for the UAV on the basis of the mining task, wherein the exploration task comprises control instructions and target position data for the UAV, and
- transmit, to the UAV, at least one task control message associated with the exploration task.

2. The apparatus of claim 1, wherein the at least one memory and the computer program code are configured to, with the at least one processor, cause the apparatus to:
- select a first sub-area or sub-volume of volume indicated in the mining task to be mapped by the UAV,
- define the exploration task to the UAV on the basis of the selected first sub-area or sub-volume, and
- assign a second sub-area or sub-volume of the volume indicated in the mining task to be mapped by the mining vehicle.

3. The apparatus of claim 2, wherein the at least one memory and the computer program code are configured to, with the at least one processor, cause the apparatus to:
- define the target position data for the UAV on the basis of the selected first sub-area or sub-volume.

4. The apparatus of any preceding claim, wherein the at least one memory and the computer program code are configured to, with the at least one processor, cause the apparatus to:
- define, based on the mining task, the portion of the worksite to be mapped as three-dimensional space in a worksite map on the basis of current position of the mining vehicle and/or current position of the UAV in the worksite map,
- define at least one target mapping position in the three-dimensional space, and
- define, as said target position data, at least one target position for the UAV on the basis of the defined target mapping position in the worksite map.

5. The apparatus of any preceding claim, wherein at least one target position for the UAV is defined in the at least one task control message in relation to a source position of the UAV or in relation to the worksite reference system.

6. The apparatus of any preceding claim, wherein the at least one memory and the computer program code are configured to, with the at least one processor, cause the apparatus to perform coordinate transformation on a set of first coordinates of a worksite map, said first coordinates being associated with the first mining task, to generate a set of second coordinates in a reference system of the UAV, wherein the second coordinates are associated with the exploration task.

7. The apparatus of any preceding claim, wherein the target position data comprises at least one of: a target area or volume to be mapped by the UAV, one or more points to be mapped by the UAV, or a path to be mapped by the UAV.

8. The apparatus of any preceding claim, wherein the at least one memory and the computer program code are configured to, with the at least one processor, cause the apparatus to receive the mining task from a mining operations control apparatus, such as a worksite management system, a worksite server or a cloud server, and to transmit the task control message by at least one of: a wireless transmitter of the mining vehicle, a UAV launch pad of the mining vehicle.

9. The apparatus of any preceding claim, wherein the at least one memory and the computer program code are configured to, with the at least one processor, cause the apparatus to:
- define a target area of a worksite on the basis of a position of the mining vehicle in relation to the worksite reference system,
- define the mining task based on the target area of a worksite in a worksite reference system, wherein the defining includes said indication of the area of the worksite in relation to the worksite reference system, and
- assign the mining task to the mining vehicle.

10. A method for performing a mining exploration task, the method comprising:
- detecting a mining task assigned to a mining vehicle at a worksite, wherein the mining vehicle is associated with an unmanned aerial vehicle, UAV, the mining task being indicative of a portion of the worksite in relation to a worksite reference system,
- defining an exploration task for the UAV on the basis of the mining task, wherein the exploration task comprises control instructions and target position data for the UAV, and
- transmitting at least one task control message associated with the exploration task to the UAV.

11. The method of claim 10, wherein the method comprises:
- selecting a first sub-area or sub-volume of volume indicated in the mining task to be mapped by the UAV,
- defining the exploration task to the UAV on the basis of the selected first sub-area or sub-volume, and
- assigning a second sub-area or sub-volume of the volume indicated in the mining task to be mapped by the mining vehicle.

12. The method of claim 11, wherein the method comprises:
- defining the target position data for the UAV on the basis of the selected first sub-area or sub-volume.

13. The method of any of claims 10 - 12, wherein the method comprises:
- defining, based on the mining task, the portion of the worksite to be mapped as three-dimensional space in a worksite map on the basis of current position of the mining vehicle and/or current position of the UAV in the worksite map,
- defining at least one target mapping position in the three-dimensional space, and
- defining, as said target position data, at least one target position for the UAV on the basis of the defined target mapping position in the worksite map.

14. The method of any of claims 10 - 13, wherein at least one target position for the UAV is defined in the at least one task control message in relation to a source position of the UAV or in relation to the worksite reference system.

15. A computer program comprising computer program code for, when executed in a data processing apparatus, to cause the apparatus to perform any of the methods of claims 10 - 14.
